# EUROPÄISCHE PATENTANMELDUNG

(11) **EP 0 900 969 A1**
(43) Veröffentlichungstag der Anmeldung: **10.03.1999**
(21) Anmeldenummer: 98116495.7
(22) Anmeldetag: 01.09.1998
(51) Int. Cl.: F16M 11/42

(54) **Fahreinrichtung für eine Vorrichtung, insbesondere eine Werkzeugmaschine**

(30) Priorität: 04.09.1997 DE 29715890 U
(71) Anmelder: Südharzer Maschinenbau GmbH, 99734 Nordhausen (DE)
(72) Erfinder: Bauer, Manfred, 91781 Weissenburg (DE)
(74) Vertreter: Sasse, Volker, Dipl.-Ing.

(57) **Zusammenfassung**

Eine Fahreinrichtung (11) für eine Vorrichtung (1) wird von einer Achse (14) gebildet, an der Räder (12) gehalten sind. In einer Betriebsstellung ist die Vorrichtung (1) mittels Stützbeinen (6) auf dem Boden (B) abgestützt, während sie in einer Transportstellung mit den Rädern (12) fahrbar abgestützt ist. Hierzu ist die Achse (14) in einer Kulisse (16) mit winkelartig gebogener Führungsbahn gehalten. Die Führungsbahn weist zwei nach oben gerichtete Schenkel mit unterschiedlicher Länge auf. Durch Verschieben der Achse (14) innerhalb der Führungsbahn zwischen beiden Schenkeln läßt sie sich zwischen der Betriebsstellung und der Transportstellung verschieben. In der Betriebsstellung ist dabei die Achse (14) im längeren Schenkel und in der Transportstellung ain Ende des kürzeren Schenkels der Führungsbahn gehalten.

## Beschreibung

Die Erfindung betrifft eine Fahreinrichtung gemäß dem Oberbegriff des Patentanspruchs 1.

Aus der DE 39 37 230 C2 ist eine Fahreinrichtung für ein Haushaltsgerät bekannt, das höhenverstellbare Rollenachsen aufweist. Diese Rollenachsen sind mittels eines Hebelgetriebes in horizontaler Richtung verschiebbar, wobei diese Verschiebung durch eine Kulissenführung in eine geringe vertikale Verschiebung der Rollenachsen umgesetzt wird. Das Hebelgetriebe zur Betätigung der Rollenachsen besitzt eine Totpunktstellung, wobei die Rollenachsen beidseits dieser Totpunktstellung jeweils eine stabile Lage einnehmen. Dieser Hebelmechanismus ist jedoch teuer in seiner Herstellung und gleichzeitig störanfällig, so daß diese Fahreinrichtung für Werkzeugmaschinen ungeeignet ist.

Der Erfindung liegt die Aufgabe zugrunde, eine Fahreinrichtung der eingangs genannten Art zu schaffen, die einfach aufgebaut ist und sich durch eine geringe Störanfälligkeit auszeichnet.

Diese Aufgabe wird erfindungsgemäß mit den Merkmalen des Patentanspruchs 1 gelöst.

Die vorgeschlagene Ausbildung der Kulisse mit einer winkelig gebogenen Führungsbahn mit nach oben gerichteten Schenkeln sorgt auf einfache Weise für ein bistabiles Halten der Achse. Befindet sich die Achse in einem der Schenkel der Führungsbahn, so bleibt sie unabhängig von ggf. wirkenden Kräften in diesem Schenkel, so lange die Vorrichtung auf dem Boden abgestellt ist. Ein Umsetzen der Achse von einem Schenkel in den anderen erfolgt durch einfaches Anheben der Vorrichtung, so daß die Achse im winkelig gebogenem Verbindungsstück zwischen beiden nach oben gerichteten Schenkeln zu liegen kommt. Ausgehend von dieser Lage kann die Achse beim Abstellen der Vorrichtung wahlweise in einen der beiden Schenkel eindringen. Die Auswahl, in welchen der beiden Schenkel die Achse gelangen soll, kann beispielsweise durch kurzes Drücken oder Ziehen an der Vorrichtung oder gegebenenfalls an der Achse selbst erfolgen. Insbesondere sind hierzu keinerlei weitere technische Maßnahmen erforderlich, die die Fahreinrichtung verteuern bzw. deren Zuverlässigkeit beeinträchtigen könnten. Die beiden Schenkel der Führungsbahn weisen unterschiedliche Längen auf, wobei der längere Schenkel für die Betriebsstellung und der kürzere Schenkel für die Transportstellung der Fahreinrichtung dient. Die Schenkellängen werden hierzu derart gewählt, daß beim kürzeren Schenkel die Achse infolge des Gewichts der Vorrichtung am oberen Schenkelende anliegt und dabei die Räder bei abgehobenen Stützbeinen auf dem Boden aufliegen. Demgegenüber ist die Achse im längeren Schenkel frei nach oben verschiebbar, so daß das gesamte Gewicht der Vorrichtung stabil auf den Stützbeinen abgestützt ist. Die Räder liegen in diesem Fall zwar auf dem Boden auf, sie können aber wegen ihrer Verschiebbarkeit nicht das Gewicht der Vorrichtung tragen. Demnach sind die Betriebs- bzw. die Transportstellung ausschließlich von der wahlweisen Lage der Achse in einem der beiden Schenkel bestimmt. Die Fahreinrichtung kann demnach im einfachsten Fall von einer Kulisse gebildet sein, die von der Achse durchdrungen ist. Aufgrund dieses überraschend einfachen Aufbaus läßt sich diese Fahreinrichtung auch kostengünstig in bestehende Vorrichtungen, insbesondere Werkzeugmaschinen, nachrüsten.

Eine bevorzugte Weiterbildung dieser Fahreinrichtung ergibt sich aus Anspruch 2. Eine im unteren Bereich der Kulisse geneigte Führungsbahn bietet den Vorteil, daß die Achse beim Anheben der Vorrichtung stets eine definierte Lage einnimmt und damit ohne weitere Maßnahmen beim Absenken der Vorrichtung in einen vorbestimmten Schenkel der Führungsbahn eindringt. Ein Ziehen bzw. Drücken an der Vorrichtung oder der Achse ist daher nur in jenen Fällen erforderlich, in denen die Achse in dem dem tiefsten Punkt der Führungsbahn gegenüberliegenden Schenkel gebracht werden soll.

Befindet sich der tiefste Punkt der Führungsbahn gemäß Anspruch 3 nahe dem kürzeren Schenkel, so wird die Fahreinrichtung durch einfaches Anheben der Vorrichtung ohne weitere Maßnahme in die Transportstellung gebracht. Dies ist wichtig, da die Vorrichtung in ihrer Betriebslage oft zwischen Tischen bzw. Wänden platzsparend aufgestellt ist, so daß ein Ziehen bzw. Drücken an der Vorrichtung relativ schwierig ist. Andererseits muß die Vorrichtung beim Abstellen in die Betriebslage häufig nach dem Einziehen der Fahreinrichtung in ihre korrekte Lage verschoben werden, so daß ein kurzes Ziehen bzw. Drücken an der Vorrichtung ohnehin erforderlich ist.

Eine gerundete Ausbildung der Kulisse im Verbindungsbereich beider Schenkel gemäß Anspruch 4 verhindert zuverlässig, daß die Achse nach dem Anheben und anschließendem Absenken der Vorrichtung von Hand im Verbindungsbereich zwischen beiden Schenkein verbleibt Eine derartige Lage der Achse wäre jedoch problematisch, da schon bei geringen Verschiebungen oder Erschütterungen der Vorrichtung die Achse in einen der beiden Schenkel eindringt, wodurch sich die Vorrichtung plötzlich und unerwartet absenkt. Durch die gerundete Ausbildung der Kulisse ist sichergestellt, daß die Achse beim Absenken der Vorrichtung stets in einen der beiden Schenkel der Führungsbahn eindringt, was die Unfallgefahr entsprechend reduziert.

Alternativ oder zusätzlich zu einer geneigten Führungsbahn der Kulisse kann die Achse gemäß Anspruch 5 auch von einer Feder in Richtung eines der Schenkel der Führungsbahn gezogen oder gedrückt werden. Eine Feder hat gegenüber einer geneigten Führungsbahn den Vorteil, daß die Führungsbahn insgesamt eine geringere Höhe aufweisen kann, so daß die Vorrichtung zum Umsetzen der Fahreinrichtung weniger hoch angehoben werden muß.

Besonders vorteilhaft ist die Ausbildung der Fahreinrichtung gemäß Anspruch 6. Die Feder drückt oder zieht die Achse entgegen der Neigung der Führungsbahn, so daß die Achse beim Absenken der Vorrichtung in jenen Schenkel der Führungsbahn eindringt, der dem tiefsten Punkt der Führungsbahn gegenüber liegt. Durch weitgehendes Entspannen der Feder, was beispielsweise durch einen entsprechenden Hand- oder Fußhebel geschehen kann, nimmt die Achse beim Anheben der Vorrichtung den tiefsten Punkt der Führungsbahn ein, so daß sie beim Absenken der Vorrichtung in den darüberliegenden Schenkel der Führungsbahn eindringt. Damit kann mit Hilfe der rückziehbaren Feder einfach festgelegt werden, in welche Stellung die Achse beim Absenken der Vorrichtung gelangen soll. Ein Ziehen oder Drücken an der Vorrichtung bzw. an der Achse ist daher überflüssig.

Eine besonders kostengünstige Realisierung der Fahreinrichtung ergibt sich aus Anspruch 7, in dem die Kulisse aus einem einstückigen, plattenförmigen Stanzteil gefertigt ist. Damit kann die Kulisse in einem einzigen Arbeitsschritt hergestellt werden, so daß diese zusammen mit der Achse und den Rädern lediglich an der Vorrichtung montiert werden muß. Für den Fall, daß eine einzige Achse zum Transport der Vorrichtung ausreicht, wird diese vorzugsweise derart an der Vorrichtung festgelegt, daß sich die Projektion des Schwerpunkts der Vorrichtung auf die die Achse einschließende Horizontalebene möglichst nahe der Achse befindet. Dies gewährleistet, daß sich der Großteil des Gewichts der Vorrichtung beim Transport auf den Rädern abstützt und die Griffe zum Erfassen der Vorrichtung im wesentlichen entlastet sind.

Eine beidseitige Abstützung der Achse in Kulissen gemäß Anspruch 8 ergibt eine stabile Lagerung der Achse, so daß diese stets eine horizontale Lage einnimmt. Da die Kulissen relativ kostengünstig herstellbar sind, verteuert sich durch die Anwendung zweier Kulissen die Fahreinrichtung kaum.

Zur Verringerung der Reibungskräfte der Räder wird gemäß Anspruch 9 vorgeschlagen, die Achse im Durchdringungsbereich durch die Kulisse in einer Gleitbuchse oder einem Wälzlager drehbar zu halten. Die Gleitbuchse wird dabei vorzugsweise von einem selbstschmierenden Kunststoff, wie beispielsweise Polytetraflorethylen erstellt, die eine im allgemeinen ausreichend geringe Gleitreibung zwischen der Achse und der Gleitbuchse gewährleistet. Lediglich bei relativ schweren Vorrichtungen ist es sinnvoll, die Achse über Kugellager abzustützen. Neben der verringerten Reibung und damit verbunden einem einfacheren Transport der Vorrichtung ergibt sich durch das Gleit- oder Wälzlager der zusätzliche Vorteil, daß die Kulisse nicht von der sich drehenden Achse, sondern lediglich von der stillstehenden Gleitbuchse erfaßt ist. Dies verhindert ein unerwünschtes Ausschleifen der Kulisse bzw. der Achse aufgrund der gegenseitigen Reibung und verlängert damit die Betriebstüchtigkeit der Fahreinrichtung.

Eine bevorzugte Ausführungsform des Erfindungsgegenstandes wird beispielhaft anhand der Zeichnung erläutert, ohne den Schutzumfang zu beschränken.

Es zeigt:
- Figur 1: eine räumliche, teilweise Explosionsdarstellung einer Kreissäge mit Fahreinrichtung und
- Figur 2: eine Detaildarstellung einer Kulisse der Fahreinrichtung gemäß Figur 1 mit unterschiedlichen Lagen der Achse.

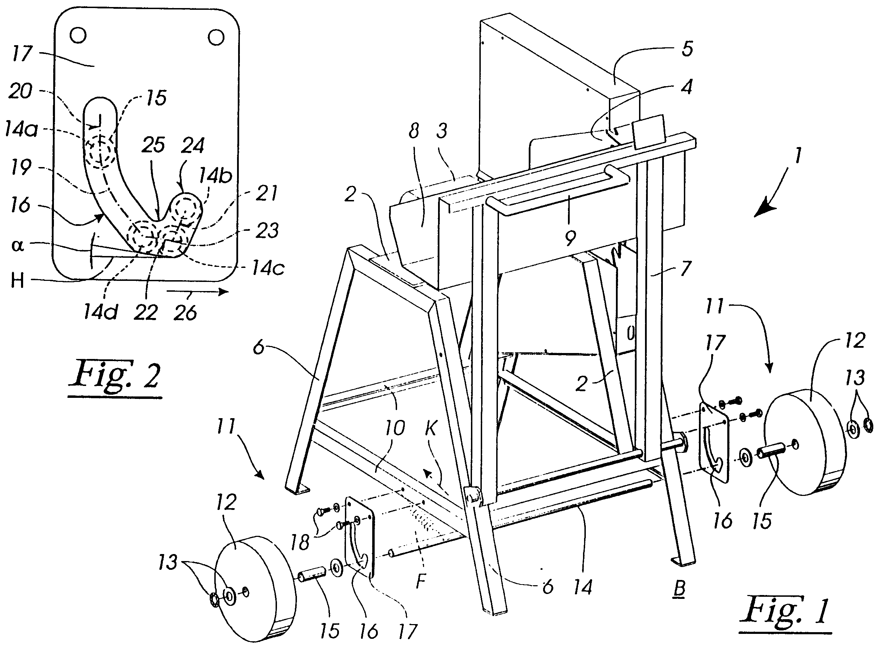

Eine Vorrichtung 1 in Form einer Kreissäge gemaß Figur 1 besteht im wesentlichen aus einem Rahmen 2, an dem ein Motorgehäuse 3 und ein Sägeblatt 4 mit einer Schutzverkleidung 5 gehalten ist. Der Rahmen 2 ist über Stützbeine 6 auf dem Boden B abgestützt. An den Stützbeinen 6 ist eine arretierbare Wippe 7 schwenkbar gehalten, die eine Aufnahme 8 für das zu sägende Holz hält. An der Wippe 7 ist des weiteren ein Griff 9 festgelegt, mit dessen Hilfe die Wippe 7 und damit das zu sägende Holzstück gegen das Sägeblatt 4 drückbar ist.

Die Stützbeine 6 sind in ihrem unteren Bereich durch einen weiteren Rahmen 10 stabilisiert, an dem eine in Explosionsdarstellung wiedergegebene Fahreinrichtung 11 befestigt ist. Die Fahreinrichtung 11 besteht aus zwei Rädern 12, die mittels Befestigungselementen 13 mit einer Achse 14 drehfest verbunden sind. Die Achse 14 ist mittels zweier Gleitbuchsen 15 aus selbstschmierendem Kunststoff drehbar gelagert. Diese Gleitbuchsen 15 durchdringen jeweils eine Kulisse 16, die jeweils aus einer Platte 17 ausgestanzt ist. Die Platten 17 sind jeweils an gegenüberliegenden Seiten des Rahmens 10 durch Befestigungsmittel 18 gehalten.

Die weitere Beschreibung der Kulisse 16 erfolgt anhand der Detailzeichnung gemäß Figur 2. Die Kulisse 16 bildet für die Achse 14 eine winkelartig gebogene Führungsbahn 19, die zwei nach oben gerichtete Schenkel 20, 21 aufweist. Der Schenkel 20 ist dabei erheblich länger als der Schenkel 21 ausgebildet. Im Verbindungsbereich 22 zwischen beiden Schenkeln 20, 21 verläuft die Führungsbahn 19 in spitzem Winkel α zur Horizontalen H, wobei sich der tiefste Punkt 23 der Führungsbahn 19 unmittelbar am unteren Ende des kurzen Schenkels 21 befindet. Im Verbindungsbereich 22 ist die Kulisse 16 oberseitig durch eine Rundung 25 begrenzt, die ein störungsfreies Umsetzen der Achse 14 zwischen den Schenkeln 20, 21 sicherstellt.

In der Kulisse 16 der Platte 17 sind vier Stellungen 14a bis 14d der Achse 14 mit der Buchse 15 strichliert angedeutet. Befindet sich die Achse 14 im langen Schenkel 20 der Führungsbahn 19, was durch die Betriebsstellung 14a dargestellt ist, so ist die Achse 14 in vertikaler Richtung nach oben bewegbar. Demnach ist das gesamte Gewicht der Vorrichtung 1 an ihren Stützbeinen 6 abgestützt, wobei die Räder 12 lediglich lose auf den Boden B aufliegen. In dieser Lage der Achse 14 ist eine ausreichend stabile Abstützung der Vorrichtung 1 mittels der festen Stützbeine 6 gewährleist, so daß die Kreissäge 1 in bekannter Weise betrieben werden kann.

Befindet sich dagegen die Achse 14 im kurzen Schenkel 21 der Führungsbahn 19, was durch die Transportstellung 14b angedeutet ist, so liegt die Achse 14 am oberen Ende 24 des kurzen Schenkels 21 an. Die Länge des kurzen Schenkels 21 ist dabei derart bemessen, daß die Räder 12 auf dem Boden abgestützt und gleichzeitig die Stützbeine 6 vom Boden B abgehoben sind. In dieser Transportstellung 14b stützt sich demnach das gesamte Gewicht der Vorrichtung 1 auf den beiden Rädern 12 ab, so daß die Vorrichtung 1 bequem und reibungsarm transportiert werden kann.

Um die Achse 14 aus der Betriebsstellung 14a in die Transportstellung 14b überzuführen, wird die Wippe 7 arretiert und die Vorrichtung 1 am Griff 9 angehoben, so daß sich die Achse 14 entlang der Führungsbahn 19 bis zur Lage 14d absenkt. Aufgrund der Neigung der Führungsbahn 19 im Verbindungsbereich 22 zwischen beiden Schenkeln 20, 21 gelangt die Achse 14 in die Lage 14c, also dem tiefsten Punkt 23 der Führungsbahn 19. Nach dem anschließenden Absenken der Vorrichtung 1 von Hand dringt die Achse 14 zwangsläufig in den unmittelbar an den tiefsten Punkt 23 der Führungsbahn 19 anschließenden kurzen Schenkel 21 ein, so daß sie schließlich die Transportstellung 14b einnimmt.

Zur Überführung der Fahreinrichtung 11 in die Betriebsstellung 14a wird die Vorrichtung 1 wiederum am Griff 9 angehoben, so daß die Achse 14 in die Lage 14c am tiefsten Punkt 23 der Führungsbahn 19 gelangt. Nun wird entweder die Vorrichtung 1 kurz in Richtung des Pfeiles 26 gezogen, oder die Achse 14 entgegen der Richtung des Pfeiles 26 gedrückt. Dabei gelangt die Achse 14 in die Lage 14d am unteren Ende des langen Schenkels 20 der Führungsbahn 19. Beim Absenken der Vorrichtung 1 gleitet die Achse 14 entlang des langen Schenkels 20 der Führungsbahn 19 nach oben, bis die Vorrichtung 1 an ihren Stützbeinen 6 auf dem Boden B abgestützt ist.

Alternativ könnte, wie in Figur 1 strichliert angedeutet, die Achse 14 von einer Feder F mit einer Kraft K beaufschlagt werden, die die Achse 14 bei angehobener Vorrichtung 1 in die Stellung 14d zieht. In diesem Fall wird die Achse 14 bei angehobener Vorrichtung 1 stets die Lage 14d einnehmen, so daß ohne weitere Maßnahmen die Achse 14 beim Absenken der Vorrichtung 1 in den langen Schenkel 20 eindringt und schließlich in die Betriebsstellung 14a gerät. Durch weitgehendes Entspannen der Feder F, was durch nicht dargestellte Hand- oder Fußhebel erfolgen kann, wird die Kraft K aufgehoben, so daß die Achse 14 beim Anheben der Vorrichtung 1 die Lage 14c einnimmt, um nach dem Absenken der Vorrichtung 1 in die Transportstellung 14b zu gelangen. Durch diese Maßnahme ist ein Verrücken der Vorrichtung 1 oder der Achse 14 beim Umsetzen von der Transportstellung 14b in die Betriebsstellung 14a und umgekehrt nicht erforderlich, da es völlig ausreicht, vorher die Feder F entweder zu spannen oder weitgehend zu entspannen.

### Bezugszeichenliste

- 1: Vorrichtung
- 2: Rahmen
- 3: Motorgehäuse
- 4: Sägeblatt
- 5: Schutzverkleidung
- 6: Stützbein
- 7: Wippe
- 8: Aufnahme
- 9: Griff
- 10: Rahmen
- 11: Fahreinrichtung
- 12: Rad
- 13: Befestigungselement
- 14: Achse
- 14a: Betriebsstellung
- 14b: Transportstellung
- 14c,d: Stellung bei angehobener Vorrichtung
- 15: Gleitbuchse
- 16: Kulisse
- 17: Platte
- 18: Befestigungsmittel
- 19: Führungsbahn
- 20: langer Schenkel
- 21: kurzer Schenkel
- 22: Verbindungsbereich
- 23: tiefster Punkt der Führungsbahn
- 24: oberes Ende des kurzen Schenkels
- 25: Rundung
- 26: Pfeil
- B: Boden
- F: Feder
- H: Horizontale
- K: Kraft
- α: Winkel zwischen der Führungsbahn und der Horizontalen

## Patentansprüche

1. Fahreinrichtung für eine Vorrichtung (1), insbesondere eine Werkzeugmaschine, wobei die Fahreinrichtung (11) von Rädern (12) gebildet ist, die an einer Achse (14) und diese in Kulissen (16) gehalten und zwischen einer Betriebsstellung (14a), in der sich die Vorrichtung (1) mittels Stützbeinen (6) auf dem Boden (B) abstützt und einer Transportstellung (14b), in der sie sich mit den Rädern (12) fahrbar abstützt, verstellbar ist, **dadurch gekennzeichnet**, daß die Kulisse (16) eine winkelartig gebogene Führuhgsbahn (19) aufweist, deren Enden nach oben gerichtete Schenkel (20, 21) unterschiedlicher Länge bilden, wobei die Achse (14) in der Betriebsstellung (14a) im längeren (20) und in der Transportstellung (14b) am Ende (24) des kürzeren Schenkels (21) der Führungsbahn (19) gehalten ist.

2. Fahreinrichtung nach Anspruch 1, **dadurch gekennzeichnet**, daß die Führungsbahn (19) im unteren Bereich (22) zu einem der Schenkel (20, 21) bezüglich der Horizontalen (H) um einen spitzen Winkel (α) geneigt ist.

3. Fahreinrichtung nach Anspruch 2, **dadurch gekennzeichnet**, daß sich der tiefste Punkt (23) der Führungsbahn (19) nahe dem kürzeren Schenkel (21) befindet.

4. Fahreinrichtung nach mindestens einem der Ansprüche 1 bis 3, **dadurch gekennzeichnet**, daß die Kulisse (16) im Verbindungsbereich (22) beider Schenkel (20, 21) oberseitig von einer Rundung (25) gebildet ist.

5. Fahreinrichtung nach mindestens einem der Ansprüche 1 bis 4, **dadurch gekennzeichnet**, daß die Achse (14) von mindestens einer Feder (F) in Richtung eines Schenkels (20, 21) ziehbar oder drückbar ist.

6. Fahreinrichtung nach Anspruch 2 und 5, **dadurch gekennzeichnet**, daß bei angehobener Vorrichtung (1) die Achse (14) durch weitgehendes Entspannen der Feder (F) in den tiefsten Punkt (23) der Führungsbahn (19) bringbar und bei gespannter Feder (F) mit einer entgegen der Neigung der Führungsbahn (19) wirkenden Kraft (K) beaufschlagbar ist..

7. Fahreinrichtung nach mindestens einem der Ansprüche 1 bis 6, **dadurch gekennzeichnet**, daß die Kulisse (16) aus einem einstückigen, plattenförmigen Stanzteil (17) gefertigt ist.

8. Fahreinrichtung nach mindestens einem der Ansprüche 1 bis 7, **dadurch gekennzeichnet**, daß die Achse (14) im Bereich beider Enden in an der Vorrichtung (1) festgelegten Kulissen (16) gehalten ist.

9. Fahreinrichtung nach mindestens einem der Ansprüche 1 bis 8, **dadurch gekennzeichnet**, daß die Achse (14) zumindest im Durchdringungsbereich durch die Kulisse (16) in einer Gleitbuchse (15) oder einem Wälzlager drehbar gehalten ist.
